# EUROPEAN PATENT APPLICATION

(11) **EP 4 319 280 A1**
(43) Date of publication of application: **07.02.2024**
(21) Application number: 21933979.3
(22) Date of filing: 01.04.2021
(51) Int. Cl.: H04W 28/06, H04W 84/12

(54) **COMMUNICATION METHOD AND COMMUNICATION APPARATUS**

(71) Applicant: Beijing Xiaomi Mobile Software Co., Ltd., Beijing 100085 (CN)
(72) Inventor: DONG, Xiandong, Beijing 100085 (CN)
(74) Representative: dompatent von Kreisler Selting Werner - Partnerschaft von Patent- und Rechtsanwälten mbB
(86) International application number: PCT/CN2021/084969
(87) International publication number: WO 2022/205320

(57) **Abstract**

The present disclosure provides a communication method and a communication apparatus. The communication method may comprise: determining a first message frame, wherein the control domain of a MAC frame header of the first message frame comprises connection adaptive information suitable for extremely high throughput communication; and sending the first message frame. The technical solution provided in exemplary embodiments of the present disclosure can improve the spectrum utilization rate.

## Description

### TECHNICAL FIELD

The present disclosure relates to the field of wireless communication, and more particularly to a communication method and a communication apparatus.

### BACKGROUND

Current research of Wi-Fi technology focuses on: bandwidth transmission of 320 MHz, and multi-band aggregation and collaboration, among others. It is desirable to increase the rate and throughput by at least four times those of existing standards. The main application scenarios of these technologies are in the fields of video transmission, Augmented Reality (AR), and Virtual Reality (VR), among others.

The multi-band aggregation and collaboration refer to simultaneous communications among devices in frequency bands of 2.4 GHz, 5 GHz and 6 GHz. A new media access control (MAC) mechanism needs to be defined to manage simultaneous communications among devices in the plurality of frequency bands. In addition, it is also desired that the multi-band aggregation and collaboration can support low-latency transmission.

The current multi-band aggregation and collaboration technology will support a maximum bandwidth of 320 MHz (160 MHz + 160 MHz), and may also support 240 MHz (160 MHz + 80 MHz) and other bandwidths.

In wireless communication technology, in order to fully use channels among devices, a modulation and coding scheme (MCS) feedback MFB (MCS feedback) mechanism may be used. In the MFB mechanism, a receiver (also called a responder) may feedback an appropriate MCS mode, so that, for example, an MCS of a requester may be adjusted.

In addition, in the current technology, under a certain bandwidth, an access point (AP) not only can allocate a single-type resource unit (SRU or RU) to a station (STA), for example, 52-tone, but also can allocate a multiple resource unit (MRU) to the station, for example, 52+26-tone, etc.

However, the MFB mechanism in the related art does not support the multiple RU and a large bandwidth (for example, 320 MHz), so an enhancement is needed.

### SUMMARY

Aspects of the present disclosure will address at least the above problems and/or disadvantages. Various embodiments of the present disclosure provide following technical solutions.

According to illustrative embodiments of the present disclosure, a communication method is provided, which includes: determining a first message frame, in which a control field of an MAC header of the first message frame includes link adaptation information suitable for an extreme high-throughput communication; and sending the first message frame.

According to illustrative embodiments of the present disclosure, another communication method is provided, which includes: receiving a first message frame, in which a control field of an MAC header of the first message frame includes link adaptation information suitable for an extreme high-throughput communication; and performing a communication operation according to the first message frame.

According to illustrative embodiments of the present disclosure, a communication apparatus is provided, which includes: a processing module configured to determine a first message frame, in which a control field of an MAC header of the first message frame includes link adaptation information suitable for an extreme high-throughput communication; and a transceiving module configured to send the first message frame.

According to illustrative embodiments of the present disclosure, another communication apparatus is provided, which includes: a transceiving module configured to receive a first message frame, in which a control field of an MAC header of the first message frame includes link adaptation information suitable for an extreme high-throughput communication; and a processing module configured to perform a communication operation according to the first message frame.

According to illustrative embodiments of the present disclosure, an electronic device is provided, which includes a memory, a processor, and a computer program stored in the memory and runnable on the processor. The processor implements the method as described above when executing the computer program.

According to illustrative embodiments of the present disclosure, a computer-readable storage medium is provided, which has stored therein a computer program that, when executed by a processor, causes the method as described above to be implemented.

The technical solutions provided in illustrative embodiments of the present disclosure can be applied to extreme high-throughput communication environments to improve channel utilization.

### BRIEF DESCRIPTION OF THE DRAWINGS

The above and other features of embodiments of the present disclosure will become more apparent from the following detailed descriptions of illustrative embodiments of the present disclosure made with reference to the drawings, in which:
FIG. 1 is an illustrative diagram showing a wireless communication scenario.
FIG. 2 is a flowchart showing a communication method according to embodiments.
FIG. 3 is a flowchart showing another communication method according to embodiments.
FIG. 4 is a block diagram showing a communication apparatus according to embodiments.

### DETAILED DESCRIPTION

The following description made with reference to the accompanying drawings is provided to assist in a comprehensive understanding of various embodiments of the present disclosure as defined by the appended claims and their equivalents. Various embodiments of the present disclosure include various specific details, but these specific details are considered to be illustrative only. In addition, descriptions of well-known techniques, functions, and constructions may be omitted for the sake of clarity and conciseness.

Terms and words used in the present disclosure are not limited to literal meanings, but are merely used by the inventor to promote a clear and consistent understanding of the present disclosure. Accordingly, to those skilled in the art, descriptions of various embodiments of the present disclosure are provided for a purpose of illustration only and are not intended to limit the present disclosure.

It should be understood that, the singular forms like "a", "an", "the" and "said" as used herein may include the plural forms as well, unless clearly indicated in the context otherwise. It should be further understood that the word "comprising", "including" or their variants as used in the present disclosure refers to a presence of the described feature(s), integer(s), step(s), operation(s), element(s) and/or component(s), but does not exclude a presence or addition of one or more other features, integers, steps, operations, elements, components and/or groups thereof.

It will be understood that, although the terms "first", "second", and like may be used herein to describe various elements, these elements should not be limited by these terms. These terms are only used to distinguish one element from another. Accordingly, a first element discussed below may be termed a second element, without departing from the teachings of illustrative embodiments.

It should be understood that when an element is referred to as being "connected" or "coupled" to another element, it can be directly connected or coupled to another element, or an intervening element may be present. In addition, the terms "connected" or "coupled" as used herein may include wireless connections or wireless couplings. As used herein, the term "and/or" or the expression "at least one/at least one of ......" includes any and all combinations of one or more of the associated listed items.

Unless otherwise defined, all terms (including technical and scientific terms) used herein have the same meaning as commonly understood by those ordinarily skilled in the art to which the present disclosure belongs.

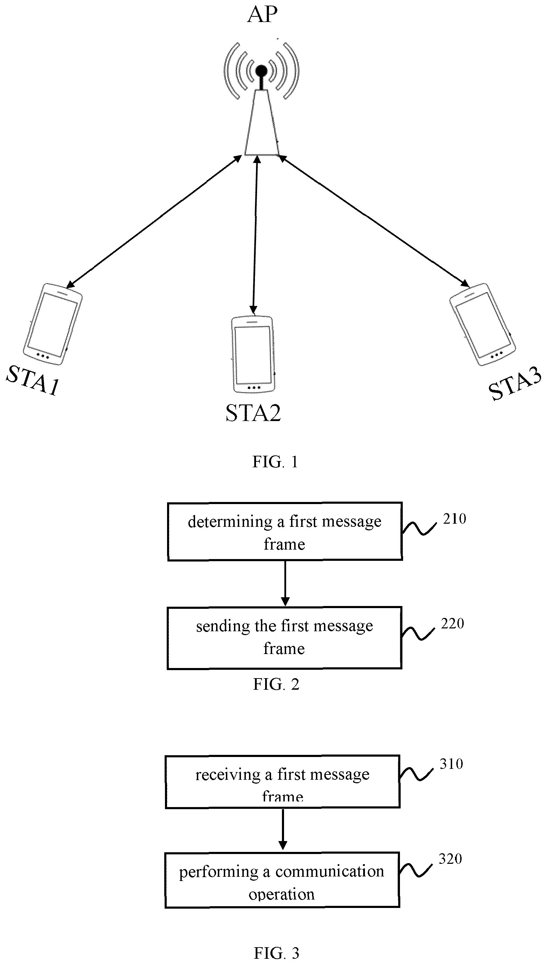

FIG. 1 is an illustrative diagram showing a wireless communication scenario.

In a wireless local area network, a basic service set (BSS) may consist of an access point (AP) device and one or more non-AP devices (or called as station (STA) devices) that communicate with the AP device. The basic service set may be linked to a distribution system (DS) through its AP device, and then accessed to another basic service set to form an extended service set (ESS).

The AP device is a wireless switch used in a wireless network and is also a core of the wireless network. The AP device may be used as a wireless base station, which is a bridge mainly configured to link the wireless network and a wired network. Using this AP device, the wired and wireless networks can be integrated.

As an example, the AP device may include software applications and/or circuits to enable other types of nodes in the wireless network to communicate with both external and internal nodes of the wireless network through the AP. For example, the AP device may be a terminal device or a network device equipped with a wireless fidelity (Wi-Fi) chip.

As an example, the station (STA) device may include, but is not limited to: a cellular phone, a smartphone, a wearable device, a computer, a personal digital assistant (PDA), a personal communication system (PCS) device, a personal information manager (PIM), a personal navigation device (PND), a global positioning system, a multimedia device, an Internet of Things (IoT) device, etc.

Although it is shown in FIG. 1 that an AP device communicates with three station (STA) devices (marked as STA 1, STA 2, and STA3), this is only illustrative, and embodiments of the present disclosure are not limited thereto. For example, any number and/or any types of AP devices and STA devices may be used.

In illustrative embodiments of the present disclosure, the AP device and the station (STA) device each may be a multi-link device (MLD), and may be represented as for example an AP MLD and a non-AP STA MLD, respectively. That is, the AP MLD and the non-AP STA MLD simultaneously support transmitting and/or receiving functions at the same time under multi-link. For example, there may be a plurality of links at different frequencies between the AP MLD and the non-AP STAMLD, such as links at 2.4 GHz, 5 GHz, and 6 GHz, or several links with identical or different bandwidths at 2.4 GHz, 5 GHz, and 6 GHz. In addition, a plurality of channels may exist under each link. The communication method and communication apparatus provided according to embodiments of the present disclosure may be applied to a communication between the AP MLD and the non-AP STA MLD, that is, may be applied to a multi-link communication environment.

In a wireless communication environment, a requester may send data with a certain MCS. A responder may calculate channel-related and recommended MCS and other parameters according to received data, a channel condition and a sending condition, and feed these parameters back to the requester. After the requester obtains the parameters fed back by the responder, it adjusts and selects an appropriate MCS mode to reduce a bit error rate of a data transmission. Such an MFB process may be an application of a link adaptation (LA) technology.

In the MFB mechanism, an MCS feedback may be performed using an immediate, delayed or unsolicited method. An immediate response will occur when an MFB responder sends a response in a transmit opportunity (TXOP) obtained by a TXOP holder, and this method allows an MFB requester to obtain a good link adaptation in the same TXOP. A delayed response will occur when the MFB responder sends a response as the TXOP holder in response to an MRQ (MCS request) in a previous TXOP obtained by the MFB requester. An unsolicited response will occur when a station sends an MFB that is not related to any previous MRQ (MCS request). For ease of description, in the following, the responder may be referred to as a receiver, and the requester may be referred to as a sender.

The communication method provided according to embodiments of the present disclosure may continue to use the link adaptation (LA) mechanism, and further support multiple-input multiple-output (16 × 16 MIMO), MRU & RU, and an MFB mechanism with a maximum bandwidth of 320 MHz.

FIG. 2 is a flowchart showing a communication method according to embodiments. The communication method shown in FIG. 2 may be applied to a receiver of data (or referred to as a "responder"). For example, the receiver may be a station or an access point. When the receiver is an access point, a sender of data (or referred to as a "requester") may be a station. When the receiver is a station, the sender may be an access point. In addition, the receiver may also be an AP MLD or a non-AP STAMLD as described above. That is, the communication method provided by the present disclosure is also suitable for a multi-link communication environment.

Referring to FIG. 2, in step 210, a first message frame may be determined. In embodiments of the present disclosure, the first message frame may be any type of MAC frame. According to embodiments of the present disclosure, the first message frame (such as a control field of an MAC header of the first message frame) may include link adaptation information suitable for an extreme high-throughput (EHT) communication. The link adaptation information according to embodiments of the present disclosure may provide an MCS suitable for an EHT communication environment to communicate.

In embodiments of the present disclosure, there may be many ways to determine the first message frame. For example, the first message frame may be generated according to at least one of following conditions: a channel status, a network condition, a load condition, a hardware capability of a sending/receiving device, a service type, and a relevant protocol provision, and embodiments of the present disclosure do not impose specific limitations on this. In embodiments of the present disclosure, the first message frame may also be obtained from an external device, and embodiments of the present disclosure do not impose specific limitations on this.

According to embodiments of the present disclosure, a corresponding bit identifier may be set in the control field of the first message frame (for example, the MAC frame) to feed back corresponding link adaptation information, such as an MCS mode, a bandwidth, a resource unit allocation, a number of spatial streams (NSS), etc.

According to embodiments of the present disclosure, the control field of the MAC header of the first message frame may have a format as shown in Table 1 below.

**Table 1. Format of control field**

| | |
|---|---|
| Control Identifier (ID) | Control Information |

As a descriptive example, Table 2 shows different values and corresponding meanings of subfields of the control ID of Table 1.

**Table 2. values of subfields of control ID**

| Values of control ID | meanings |
|---|---|
| 0 | Triggered response scheduling (TRS) |
| 1 | Operating mode (OM) |
| 2 | HE link adaptation (H LA) |
| 3 | Buffer status report (BSR) |
| 4 | UL power headroom (UPH) |
| 5 | Bandwidth query report (BQR) |
| 6 | Command and status (CAS) |
| 7 | EHT link adaptation (EHT LA) |
| 8 to 14 | Reserved |
| 15 | Ones need expansion surely (ONES) |

Referring to the Table 1 and the Table 2, when the control ID subfield is set to different values, it may have different meanings. That is, a control information subfield may indicate different information, and the control information subfield may have different lengths correspondingly. It will be understood that the values and their meanings of the control ID subfield shown in the Table 2 are only illustrative and are not intended to limit the inventive concept of the present disclosure, and other values and meanings are also contained within the scope of the present disclosure. In addition, it can be understood that each element shown in the Table 2 exists independently. These elements are illustratively listed in a same table, but it does not mean that all elements in the table must exist at the same time as shows in the table. A value of each element does not depend on a value of any other element in the Table 2. Therefore, those skilled in the art can understand that the value of each element in the table of the present disclosure is an independent embodiment.

In the Table 2, the control ID may be set to a specific value indicating that the control information corresponds to link adaptation information suitable for the EHT (hereinafter referred to as "EHT link adaptation information"), for example, the value "7" in the Table 2. However, the present disclosure is not limited thereto, and the control ID may also be set to other values to indicate the EHT link adaptation information. In the following, descriptions are mainly focused on embodiments in which the control information corresponds to the EHT link adaptation information. For convenience of description, the control information according to embodiments may be called the "EHT link adaptation information".

As a descriptive example, when the control ID is set to the specific value (for example, the value "7" in the Table 2), the EHT link adaptation information may have the format shown in Table 3 below.

**Table 3. Format of EHT link adaptation information**

| B0 | B1 | B2 | B4 | B5 | B8 | B9 | B10 | B17 |
|---|---|---|---|---|---|---|---|---|
| Unsolicited MFB | MRQ | NSS | | EHT-MCS | | DCM | RU & MRU allocation | |
| bit: 1 | 1 | 3 | | 4 | | 1 | 8 | |

**Table 3. Format of EHT link adaptation information (continued)**

| B18 | B19 | B20 | B22 | B23 | B24 | B25 |
|---|---|---|---|---|---|---|
| BW | | MSI/partial PPDU parameters | | Tx beamforming | UL HE TB PPDU MFB | Large bandwidth |
| bit: 2 | | 3 | | 1 | 1 | 1 |

Each content and its corresponding bit order (B0 to B25) and a number of bits shown in the Table 3 are only descriptive examples and are not intended to limit the present disclosure. In addition, although it is shown in the Table 3 that the EHT link adaptation information includes various contents, such as the unsolicited MFB, the MRQ, the NSS, the EHT-MCS, the DCM, the RU & MRU allocation, the BW, the MSI/partial PPDU parameters, the Tx beamforming, the LTL HE TB PPDU MFB, and the large bandwidth, the present disclosure is not limited thereto. For example, part of the contents in the Table 3 may be omitted, or the Table 3 may also include more other contents.

The EHT link adaptation information according to embodiments of the present disclosure is described in detail below with reference to the Table 3.

According to embodiments of the present disclosure, the EHT link adaptation information may include a first bandwidth identifier, for example, the "large bandwidth" shown in the B25 in the Table 3. The first bandwidth identifier may be configured to identify a support of a bandwidth of, for example, 320 MHz. For example, when the B25 in the Table 3 is set to a specific value (such as "1"), it may indicate a support of the bandwidth of 320 MHz. When the B25 in the Table 3 is omitted or set to other value (such as "0"), it may indicate that the bandwidth of 320 MHz is not supported. However, this is only illustrative, and the present disclosure is not limited thereto. For example, the first bandwidth identifier may be set to support any other larger bandwidths than 160 MHz, such as 240 MHz.

According to embodiments of the present disclosure, the EHT link adaptation information may also include a second bandwidth identifier, for example, the "BW" shown in the B18 and B19 in the Table 3. The second bandwidth identifier may be configured to identify a support of a bandwidth less than 320 MHz. For example, the two bits "B18 and B 19" may be set to different values to indicate different bandwidths less than 320 MHz. For example, the "B18 and B19" may be set to a value of "0" indicating a bandwidth of 20 MHz, a value of "1" indicating a bandwidth of 40 MHz, a value of "2" indicating a bandwidth of 80 MHz, or a value of "3" indicating a bandwidth of 160 MHz. It will be understood that values of the bits and their indicated bandwidths shown here are illustrative, and are not intended to limit the present disclosure.

According to embodiments of the present disclosure, when the first bandwidth identifier (the B25) is set to support the bandwidth of 320 MHz, the second bandwidth identifier (the "BW" shown in the B18 and B 19) may be set to support the bandwidth of 160 MHz. This can achieve compatibility with devices (such as devices that support high efficiency (HE) communication) in the related art. For example, the "BW" bits may be recognized by the devices that support the HE communication, and the first bandwidth identifier (the B25) may be recognized by devices that support EHT communication.

In addition, although it is shown in the Table 3 that the first bandwidth identifier (the B25) and the second bandwidth identifier (the "BW" shown in the B18 and B 19) are located in different subfields, the present disclosure is not limited thereto. The number of bits of the "BW" may be changed. For example, the number of bits of the "BW" may be set to 3 bits, so that a separate 3-bit subfield may be used to identify a support of any size of bandwidths, such as 20 MHz, 40 MHz, 80 MHz, 160 MHz, 240 MHz, 320 MHz, etc.

According to embodiments of the present disclosure, the EHT link adaptation information may also include a resource unit allocation identifier, for example, the "RU & MRU allocation" in the Table 3. The resource unit allocation identifier may be configured to identify an allocated single resource unit (RU) or multiple resource unit (MRU).

According to embodiments, a single-type resource unit may be a 26-tone, a 52-tone, a 106-tone, a 242-tone, a 484-tone, or a 996-tone. According to embodiments, the multiple resource unit may be composed of single-type resource units. In an embodiment, the multiple resource unit may be composed of two specific single-type resource units and is related to a bandwidth. For example, the multiple resource unit may include at least: a first single-type resource unit and a second single-type resource unit, and the first single-type resource unit has different numbers of tones from the second single-type resource unit. That is to say, the multiple resource unit may be composed of at least two different single-type resource units, for example, 26-tone + 52-tone (20/40 MHz), 106-tone + 26-tone (20/40 MHz), 484-tone + 242-tone (80 MHz), 484-tone + 996-tone (160 MHz), 996-tone + 484-tone + 242-tone (160 MHz), 2 × 996-tone (160 MHz), 2 × 996-tone + 484-tone (240 MHz), 3 × 996-tone + 484-tone (320 MHz), 4 × 996-tone (160 + 160/320 MHz), etc.

In embodiments of the present disclosure, an RU & MRU allocation subfield may be used together with the first bandwidth identifier (the B25) and the second bandwidth identifier (the "BW" shown in the B18 and B19) to identify the RU or the MRU. In combination with the setting values of the first bandwidth identifier (the B25) and the second bandwidth identifier (the "BW" shown in the B18 and B19), the B10 to the B17 configured to indicate the RU & MRU allocation may be set to different values to indicate single-type resource units or multiple resource units with different sizes under corresponding bandwidths.

According to embodiments of the present disclosure, the EHT link adaptation information may include: a first modulation mode identifier configured to identify a modulation mode of a binary phase shift keying-dual carrier modulation (BPSK-DCM) or a modulation mode of a binary phase shift keying-dual carrier modulation-duplication (BPSK-DCM-DUP). According to embodiments of the present disclosure, the EHT link adaptation information may also include a dual carrier modulation (DCM) identification bit, for example, the "DCM" in the Table 3, which is configured to identify a usability of a dual carrier modulation. According to embodiments of the present disclosure, when the dual carrier modulation (DCM) identification bit is set to indicate a use of the dual carrier modulation (for example, the bit "B29" indicating the "DCM" in the Table 3 is set to a specific value "1"), the first modulation mode identifier may be set to the modulation mode of the BPSK-DCM or the modulation mode of the BPSK-DCM-DUP.

According to embodiments of the present disclosure, the EHT link adaptation information may also include a second modulation mode identifier, for example, the EHT-MCS in the Table 3. When the bits "B5 to B8" of the second modulation mode identifier "EHT-MCS" are set to different values, the second modulation mode identifier "EHT-MCS" may indicate a BPSK, a quadrature phase shift keying (QPSK), a 16-quadrature amplitude modulation (16-QAM), a 64-QAM, a 256-QAM, a 1024-QAM, a 4096-QAM or other modulation modes.

In embodiments of the present disclosure, since the BPSK-DCM and the BPSK-DCM-DUP only support NSS = 1 in an EHT communication environment, when the DCM appears (that is, the dual carrier modulation (DCM) identification bit is set to indicate the use of the dual carrier modulation), one bit in the number of bit streams (NSS) in the Table 3 may be reused to identify the BPSK-DCM or the BPSK-DCM-DUP. For example, a lowest bit (the B2) in the "B2 to B4" of the NSS may be reused to identify the BPSK-DCM or the BPSK-DCM-DUP. For example, when the lowest bit is set to a first specific value (such as "1"), it identifies a support of the modulation mode of the BPSK-DCM. When the lowest bit is set to a second specific value (such as "0") that is different from the first specific value, it identifies a support of the modulation mode of the BPSK-DCM-DUP. However, these are only examples, and are not intended to limit the present disclosure. For example, any other bits of the NSS may be reused for identification.

According to embodiments of the present disclosure, the EHT link adaptation information may include: an identifier of a number of spatial streams, which may be configured to identify a support of any one of 1 spatial stream to 16 spatial streams. In the EHT communication environment, a maximum of 16 × 16 MIMO (i.e., 16 bit streams) can be supported. However, the NSS in the Table 3 only includes 3 bits "B2 to B4", which can only identify a maximum of 8 bit streams, not 16 bit streams. Considering that the DCM only supports NSS = 1, so the DCM bit may be reused for identification. That is to say, the 3 bits "B2 to B4" of the NSS in the Table 3 and 1 bit "B9" of the DCM in the Table 3 (a total of 4 bits) may be used together to identify any one of 1 spatial stream to 16 spatial streams (support a maximum of 16 spatial streams).

In this case, in order to avoid the conflict with the case where the DCM and the first modulation identifier are used together to identify the modulation mode of the BPSK-DCM or the modulation mode of the BPSK-DCM-DUP as described above, other manners may be used to identify whether the DCM occurs. In embodiments of the present disclosure, the value of the control ID subfield in the Table 2 may be set to a specific value (for example, any value in the reserved 8 to 14) to indicate whether the DCM occurs. For example, when the value of the control ID subfield in the Table 2 is set to a specific value "8", it may indicate an occurrence of the DCM. It will be understood that the identification manners and the value described here are only examples, and are not intended to limit the present disclosure. For example, in another embodiment of the present disclosure, an additional bit (such as the B26) may be added in the Table 3 to indicate whether the DCM occurs.

Referring back to FIG. 2, in step 220, the first message frame may be sent. When the communication method shown in FIG. 2 is applied to the multi-link communication environment, in the step 220, the first message frame may be sent under any link among a plurality of links established between the AP MLD and the non-AP STA MLD.

Through the communication method of FIG. 2, the first message frame carrying the link adaptation information suitable for the EHT communication may be fed back, so that the MSC mode configured to transmit data may be adjusted according to the multiple-input multiple-output (for example, 16 × 16 MIMO), the MRU & RU allocation, the BPSK-DCM or the BPSK-DCM-DUP, or the MFB mechanism with a maximum bandwidth of 320 MHz identified by the link adaptation information, so as to improve utilization of channels and the reliability of data transmissions.

FIG. 3 is a flowchart showing another communication method according to embodiments of the present disclosure. The communication method shown in FIG. 3 may be applied to a sender of data (or referred to as a "requester"). For example, a receiver of data may be a station or an access point.

Referring to FIG. 3, in step 310, a first message frame may be received. When the communication method shown in FIG. 3 is applied to a multi-link communication environment, in the step 310, the first message frame may be received under any link among a plurality of links established between an AP MLD and a non-AP STA MLD. According to embodiments of the present disclosure, a control field of an MAC header of the first message frame may include link adaptation information suitable for an extreme high-throughput (EHT) communication (that is, EHT link adaptation information). The control field of the MAC header of the first message frame may be as described in embodiments of the Table 1 and the Table 2, and repeated descriptions are omitted here for simplicity.

According to embodiments, the EHT link adaptation information includes: a first bandwidth identifier configured to identify a support of a bandwidth of 320 MHz.

According to embodiments, the EHT link adaptation information further includes: a second bandwidth identifier configured to identify a support of a bandwidth less than 320 MHz.

According to embodiments, when the first bandwidth identifier is set to support the bandwidth of 320 MHz, the second bandwidth identifier is set to support a bandwidth of 160 MHz.

According to embodiments, the EHT link adaptation information further includes: a resource unit allocation identifier configured to identify an allocated single resource unit or multiple resource unit.

According to embodiments, the EHT link adaptation information includes: a first modulation mode identifier configured to identify a modulation mode of a binary phase shift keying-dual carrier modulation (BPSK-DCM) or a modulation mode of a binary phase shift keying-dual carrier modulation-duplication (BPSK-DCM-DUP).

According to embodiments, the EHT link adaptation information further includes: a dual carrier modulation (DCM) identification bit configured to identify a usability of a dual carrier modulation. When the dual carrier modulation (DCM) identification bit is set to indicate a use of the dual carrier modulation, the first modulation mode identifier is set to the modulation mode of the BPSK-DCM or the modulation mode of the BPSK-DCM-DUP.

According to embodiments, the EHT link adaptation information includes: an identifier of a number of spatial streams configured to identify a support of any one of 1 spatial stream to 16 spatial streams.

The EHT link adaptation information and its contained contents in the step 310 may be similar to embodiments described above with reference to the Table 3, and repeated descriptions are omitted here for simplicity.

In step 320, a communication operation may be performed according to the first message frame. For example, the MSC mode configured to transmit data can be adjusted according to the link adaptation information suitable for the EHT communication carried in the first message frame (for example, multiple-input multiple-output (for example, 16 × 16 MIMO), the MRU & RU allocation, the BPSK-DCM or the BPSK-DCM-DUP, or a maximum bandwidth of 320 MHz), so as to improve utilization of channels and the reliability of data transmissions.

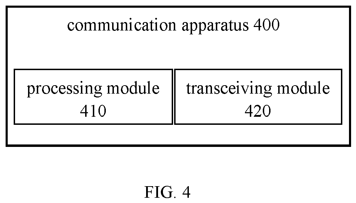

FIG. 4 is a block diagram showing a communication apparatus 400 according to embodiments. The communication apparatus 400 shown in FIG. 4 may be applied to a receiver of data (or referred to as a "responder") or a sender of data (or referred to as a "requester"). For example, the receiver may be a station or an access point. When the receiver is the access point, the sender may be the station. When the receiver is the station, the sender may be the access point. In addition, the receiver may also be an AP MLD or a non-AP STAMLD described above, that is, the communication apparatus provided in FIG. 4 is also suitable for a multi-link communication environment.

When the communication apparatus 400 shown in FIG. 4 is applied to the receiver of the data (or referred to as the "responder"), a processing module 410 may be configured to determine a first message frame, a control field of an MAC header of the first message frame may include link adaptation information suitable for an extreme high-throughput (EHT) communication; and a transceiving module 420 may be configured to send the first message frame. That is to say, in this case, the communication apparatus 400 may perform the communication method described with reference to FIG. 2, and the first message frame, the control field of the MAC header, and the link adaptation information suitable for the EHT communication may be similar to embodiments described with reference to FIG. 2 and Tables 1 to 3, and repeated descriptions are omitted here for simplicity.

When the communication apparatus 400 shown in FIG. 4 is applied to the sender of the data (or referred to as the "requester"), a transceiving module 420 may be configured to receive a first message frame, a control field of an MAC header of the first message frame may include link adaptation information suitable for an extreme high-throughput communication; and a processing module 410 may be configured to perform a communication operation according to the first message frame. That is to say, in this case, the communication apparatus 400 may perform the communication method described with reference to FIG. 3, and repeated descriptions are omitted here for simplicity.

In addition, the communication apparatus 400 shown in FIG. 4 is only illustrative, and embodiments of the present disclosure are not limited thereto. For example, the communication apparatus 400 may also include other modules, such as a memory module and the like. In addition, individual modules in the communication apparatus 400 may be combined into more complex modules, or may be divided into more seperate modules.

The communication method and communication apparatus according to embodiments of the present disclosure may be suitable for the EHT communication environment, and may improve the utilization of channels and spectrums.

Based on the same principles as the methods provided by embodiments of the present disclosure, embodiments of the present disclosure also provide an electronic device, which includes a processor and a memory. The memory has stored therein machine-readable instructions (also may be referred to as "computer programs"), and the processor is configured to execute the machine-readable instructions to implement the methods described with reference to FIG. 2 and FIG. 3.

Embodiments of the present disclosure also provide a computer-readable storage medium having stored therein a computer program that, when executed by a processor, causes the method described with reference to FIG. 2 and FIG. 3 to be implemented.

In illustrative embodiments, the processor may be various illustrative logical blocks, modules and circuits for implementing or executing the contents described in the present disclosure, such as a central processing unit (CPU), a general-purpose processor, a digital signal processor (DSP), an application specific integrated circuit (ASIC), a field programmable gate array (FPGA) or other programmable logic devices, transistor logic devices, hardware components or any combination thereof. The processor may also be a combination that implements computing functions, including such as a combination of one or more microprocessors, a combination of the DSP and the microprocessor, etc.

In illustrative embodiments, the memory may be, for example, a read only memory (ROM), a random access memory (RAM), an electrically erasable programmable read only memory (EEPROM), a compact disc read only memory (CD-ROM) or other optical storages, optical disc storages (including a compressed optical disc, a laser disc, an optical disc, a digital versatile disc, a Blu-ray disc, etc.), magnetic disk storage media or other magnetic storage devices, or any other media that may be configured to carry or store program codes in a form of instructions or data structures and may be accessed by a computer, but is not limited thereto.

It should be understood that although various steps in the flowchart of the accompanying drawings are shown in sequence as indicated by arrows, these steps are not necessarily performed in the sequence indicated by the arrows. Unless explicitly stated in the present disclosure, the execution of these steps is not strictly limited in the sequence and may be executed in other sequences. In addition, at least some of the steps in the flowchart of the accompanying drawings may include a plurality of sub-steps or a plurality of stages. These sub-steps or stages are not necessarily executed at the same time, but may be executed at different times, and are also not necessarily to be performed sequentially, but may be performed in turn or alternately with at least part of other steps or sub-steps or stages of the other steps.

While the present disclosure has been shown and described with reference to some embodiments thereof, those skilled in the art will understand that various changes may be made in forms and details without departing from the scope of the present disclosure. Therefore, the scope of the present disclosure should not be limited to embodiments, but should be defined by the appended claims and their equivalents.

## Claims

1. A communication method, comprising:
determining a first message frame, wherein a control field of a media access control (MAC) header of the first message frame comprises link adaptation information suitable for an extreme high-throughput communication; and
sending the first message frame.

2. The communication method according to claim 1, wherein the link adaptation information comprises: a first bandwidth identifier configured to identify a support of a bandwidth of 320 MHz.

3. The communication method according to claim 2, wherein the link adaptation information further comprises: a second bandwidth identifier configured to identify a support of a bandwidth less than 320 MHz.

4. The communication method according to claim 3, wherein when the first bandwidth identifier is set to support the bandwidth of 320 MHz, the second bandwidth identifier is set to support a bandwidth of 160 MHz.

5. The communication method according to any one of claims 2 to 4, wherein the link adaptation information further comprises: a resource unit allocation identifier configured to identify an allocated single resource unit or multiple resource unit.

6. The communication method according to claim 1, wherein the link adaptation information comprises: a first modulation mode identifier configured to identify a modulation mode of a binary phase shift keying-dual carrier modulation (BPSK-DCM) or a modulation mode of a binary phase shift keying-dual carrier modulation-duplication (BPSK-DCM-DUP).

7. The communication method according to claim 6, wherein the link adaptation information further comprises: a dual carrier modulation (DCM) identification bit configured to identify a usability of a dual carrier modulation, and
wherein when the dual carrier modulation (DCM) identification bit is set to indicate a use of the dual carrier modulation, the first modulation mode identifier is set to the modulation mode of the BPSK-DCM or the modulation mode of the BPSK-DCM-DUP.

8. The communication method according to claim 1, wherein the link adaptation information comprises: an identifier of a number of spatial streams configured to identify a support of any one of 1 spatial stream to 16 spatial streams.

9. A communication method, comprising:
receiving a first message frame, wherein a control field of a media access control (MAC) header of the first message frame comprises link adaptation information suitable for an extreme high-throughput communication; and
performing a communication operation according to the first message frame.

10. The communication method according to claim 9, wherein the link adaptation information comprises: a first bandwidth identifier configured to identify a support of a bandwidth of 320 MHz.

11. The communication method according to claim 10, wherein the link adaptation information further comprises: a second bandwidth identifier configured to identify a support of a bandwidth less than 320 MHz.

12. The communication method according to claim 11, wherein when the first bandwidth identifier is set to support the bandwidth of 320 MHz, the second bandwidth identifier is set to support a bandwidth of 160 MHz.

13. The communication method according to any one of claims 10 to 12, wherein the link adaptation information further comprises: a resource unit allocation identifier configured to identify an allocated single resource unit or multiple resource unit.

14. The communication method according to claim 9, wherein the link adaptation information comprises: a first modulation mode identifier configured to identify a modulation mode of a binary phase shift keying-dual carrier modulation (BPSK-DCM) or a modulation mode of a binary phase shift keying-dual carrier modulation-duplication (BPSK-DCM-DUP).

15. The communication method according to claim 14, wherein the link adaptation information further comprises: a dual carrier modulation (DCM) identification bit configured to identify a usability of a dual carrier modulation, and
wherein when the dual carrier modulation (DCM) identification bit is set to indicate a use of the dual carrier modulation, the first modulation mode identifier is set to the modulation mode of the BPSK-DCM or the modulation mode of the BPSK-DCM-DUP.

16. The communication method according to claim 9, wherein the link adaptation information comprises: an identifier of a number of spatial streams configured to identify a support of any one of 1 spatial stream to 16 spatial streams.

17. A communication apparatus, comprising:
a processing module configured to determine a first message frame, wherein a control field of a media access control (MAC) header of the first message frame comprises link adaptation information suitable for an extreme high-throughput communication; and
a transceiving module configured to send the first message frame.

18. A communication apparatus, comprising:
a transceiving module configured to receive a first message frame, wherein a control field of a media access control (MAC) header of the first message frame comprises link adaptation information suitable for an extreme high-throughput communication; and
a processing module configured to perform a communication operation according to the first message frame.

19. An electronic device, comprising a memory, a processor, and a computer program stored in the memory and runnable on the processor, wherein the processor implements the method according to any one of claims 1 to 8 or according to any one of claims 9 to 16 when executing the computer program.

20. A computer-readable storage medium having stored therein a computer program that, when executed by a processor, causes the method according to any one of claims 1 to 8 or according to any one of claims 9 to 16 to be implemented.
